(19) Europäisches Patentamt
European Patent Office
Office européen des brevets

(11) **EP 2 991 872 B1**

(12) **FASCICULE DE BREVET EUROPEEN**

(45) Date de publication et mention
de la délivrance du brevet:
**15.03.2017 Bulletin 2017/11**

(21) Numéro de dépôt: **14719052.4**

(22) Date de dépôt: **27.03.2014**

(51) Int Cl.:
***B60W 30/18*** *(2012.01)*

(86) Numéro de dépôt international:
**PCT/FR2014/050726**

(87) Numéro de publication internationale:
**WO 2014/177782 (06.11.2014 Gazette 2014/45)**

(54) **SYSTEME ET PROCEDE DE COMMANDE D'UN VEHICULE AUTOMOBILE EN ROULAGE EN ROUE LIBRE**

SYSTEM UND VERFAHREN ZUR STEUERUNG EINES FREIROLLENDEN KRAFTFAHRZEUGS

SYSTEM AND METHOD FOR CONTROLLING A FREE-WHEELING MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2013 FR 1353957**

(43) Date de publication de la demande:
**09.03.2016 Bulletin 2016/10**

(73) Titulaire: **Renault S.A.S.**
**92100 Boulogne-Billancourt (FR)**

(72) Inventeurs:
• **ROUDEAU, Frédéric**
**F-94400 Vitry Sur Seine (FR)**
• **GOURARA, Amine**
**F-91180 Saint Germain Les Arpajon (FR)**

(56) Documents cités:
**WO-A1-2012/169960       DE-A1-102011 005 320**
**DE-A1-102011 083 332**

## Description

L'invention a pour domaine technique la commande d'un véhicule automobile à transmission automatique.

Dans les applications actuelles, une partie de la consommation de carburant d'un véhicule est due à la compensation par le moteur de sa propre résistance à l'avancement.

Il est alors nécessaire de réduire ou d'annuler cette consommation de carburant lorsque le véhicule ne nécessite pas de couple à la roue provenant du moteur à combustion interne, le couple étant moteur ou de freinage.

De l'état de la technique, on connait les documents suivants :

WO2012169960 divulgue un procédé de commande d'un véhicule automobile comprenant au moins un moteur à combustion interne relié à des roues motrices par une transmission comprenant un mode de roulage en roue libre et la détermination du couple moteur au niveau des roues. Le document WO2010128898 divulgue un roulage en "roue libre", sans arrêt du moteur, basé sur une détection de pente.

Le document FR2829186 divulgue la détection d'entrée en roue libre en fonction d'un seuil de position de la pédale d'accélérateur, d'un gradient de position de la pédale d'accélérateur et d'un seuil d'accélération du véhicule.

Le document JP59089235 divulgue un système mécanique d'entrée en conditions de roue-libre sur absence de besoin de freinage et seuil de régime moteur.

Il existe donc un besoin d'un système et d'un procédé de commande permettant de minimiser la consommation de carburant d'un véhicule automobile lorsque le couple moteur n'est pas nécessaire pour faire se mouvoir ou s'arrêter le véhicule.

Un objet de l'invention est un procédé de commande d'un véhicule automobile comprenant au moins un moteur à combustion interne relié à des roues motrices par une transmission. Le procédé de commande comprend les étapes suivantes :

on détermine le couple moteur au niveau des roues,
on détermine l'accélération longitudinale du véhicule lorsque le mode de roulage en « roue libre » est engagé, en fonction du couple moteur et des couples résistants à la roue,
on détermine l'accélération longitudinale du véhicule lorsque le mode de roulage en « roue libre » est désengagé, en fonction du couple moteur et des couples résistants à la roue,
on détermine l'écart d'accélération longitudinale entre un mode de roulage en « roue libre » engagé et un mode de roulage en « roue libre » désengagé,
on ouvre la chaîne de transmission lorsque l'écart d'accélération longitudinale tend sensiblement vers une valeur nulle.

On peut ouvrir la chaîne de transmission lorsque toutes les conditions suivantes sont réalisées :

- la pédale de frein est relâchée, et
- l'écart d'accélération longitudinale lors du passage d'un mode de roulage en « roue libre » désenclenché à un mode de roulage en « roue libre » enclenché, est inférieur à un premier seuil positif, et supérieur à un deuxième seuil négatif, et
- le rapport de boite de vitesse engagé est supérieur à un rapport de seuil, et
- la vitesse du véhicule est comprise entre une valeur minimale et une valeur maximale de mode de roulage en roue libre, et

On peut fermer la chaîne de transmission lorsque l'une quelconque des conditions suivantes est réalisé:

- la pédale de frein est enfoncée, ou
- l'écart d'accélération longitudinale lors du passage d'un mode de roulage en « roue libre » enclenché à un mode de roulage en « roue libre » désenclenché, est supérieur à un troisième seuil, ou
- l'écart d'accélération longitudinale lors du passage d'un mode de roulage en « roue libre » enclenché à un mode de roulage en « roue libre » désenclenché, est inférieur à un quatrième seuil, ou
- le rapport de boite de vitesse engagé est inférieur à un rapport de seuil, ou
- la vitesse du véhicule est inférieure ou égale à une valeur minimale de mode de roulage en roue libre, ou
- la vitesse du véhicule est supérieure ou égale à une valeur maximale de mode de roulage en roue libre.

Le premier seuil, le deuxième seuil, le troisième seuil et le quatrième seuil sont calibrables en fonction de la vitesse du véhicule.

On peut commander un arrêt du moteur à combustion interne lorsque l'on commande l'ouverture de la chaine de transmission.

Un autre objet de l'invention est un système de commande d'un véhicule automobile comprenant au moins un moteur à combustion interne relié à des roues motrices par une transmission. Le système de commande comprend un moyen de détermination du couple moteur au niveau des roues, un moyen de détermination de l'accélération longitudinale du véhicule lorsque le mode de roulage en « roue libre » est engagé en fonction du couple moteur et des couples résistants à la roue, un moyen de détermination de l'accélération longitudinale du véhicule lorsque le mode de roulage en « roue libre » est désengagé en fonction du couple moteur et des couples résistants à la roue, un moyen de détermination de l'écart d'accélération longitudinale entre un mode de roulage en « roue libre » engagé et un mode de roulage en « roue libre » désengagé, et un moyen de commande apte à commander l'ouverture de la chaîne de transmission lorsque l'écart d'accélération longitudinale tend sensiblement vers une valeur nulle.

Le moyen de commande peut également être apte à commander un arrêt du moteur à combustion interne lorsque l'on commande l'ouverture de la chaine de transmission.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un véhicule muni d'un système de commande selon l'invention, et
- la figure 2 illustre les principales conditions d'entrée et de sortie d'un mode de roulage en roue libre.

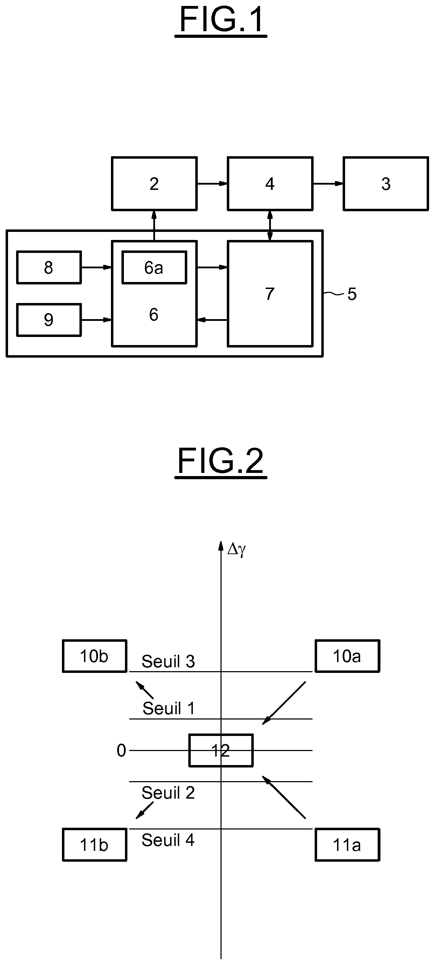

Sur la figure 1, on peut voir un véhicule automobile comprenant un groupe moteur 2 comprenant un moteur à combustion interne et/ou une ou plusieurs machines électriques, relié aux roues motrices 3 par l'intermédiaire d'une transmission 4.

Le véhicule comprend également un moyen de commande électronique 5 comprenant lui-même un calculateur d'injection 6, un calculateur de transmission 7, un estimateur de couple moteur effectif 8, et un estimateur de masse du véhicule 9.

Un système de commande de couplage référencé 6a permet de piloter l'ouverture et la fermeture d'un moyen de couplage du moteur à la transmission automatique lors des phases de roulage du véhicule ne nécessitant pas de motricité ou de frein moteur aux roues, d'origine thermique ou électrique. Le système de commande de couplage 6a peut être disposé dans le calculateur d'injection 6, tel que représenté sur la figure 1 ou peut être autonome.

Le système de commande du couplage 6a permet d'ouvrir la chaîne de transmission 4 avec ou sans arrêt du groupe moteur 2, lorsque le couple moteur produit par l'injection compense les pertes du groupe moteur 2. Une telle situation correspond à un léger appui de la pédale d'accélérateur pour compenser la traînée du moteur. Le système de commande 6a permet ainsi de faire fonctionner le véhicule dans un mode de roulage en "roue libre" (« Sailing Mode » en langue anglaise) qui entretient l'avancement du véhicule sans force de traction.

Le système de commande de couplage 6a comprend un moyen de détermination de l'accélération longitudinale du véhicule lorsque le mode de roulage en « roue libre » est engagé, un moyen de détermination de l'accélération longitudinale du véhicule lorsque le mode de roulage en « roue libre » est désengagé, un moyen de détermination de l'écart d'accélération longitudinale entre un mode de roulage en « roue libre » engagé et un mode de roulage en « roue libre » désengagé, et un moyen de commande apte à commander le couplage et le découplage du groupe moteur à la chaine de transmission. Ainsi, le système de commande de couplage reçoit en entrée l'estimation de la masse du véhicule, du couple à la roue, et a accès aux différents signaux disponibles au niveau des bus de données du véhicule. Le système de commande émet en sortie un signal de commande à destination de la chaine de transmission 4.

Le moyen de détermination de l'accélération longitudinale du véhicule lorsque le mode de roulage en « roue libre » est engagé est apte à déterminer l'accélération longitudinale en fonction des couples résistants à la roue.

Le moyen de détermination de l'accélération longitudinale du véhicule lorsque le mode de roulage en « roue libre » est désengagé est apte à déterminer l'accélération longitudinale en fonction du couple moteur et des couples résistants à la roue.

Les équations décrites ci-dessous précisent les différents calculs opérés par les moyens de détermination. Le moyen de commande effectue de manière logicielle ou matérielle les différentes étapes de procédé décrites ci-après.

En appliquant l'équation fondamentale de la dynamique selon la direction longitudinale du véhicule, on obtient l'équation suivante :

$$\sum \mathrm{F_{Lon}} = \mathrm{M_{Vh}}\gamma \qquad\qquad (\mathrm{Eq.}\ 1)$$

Lorsque le mode de roulage en « roue libre » n'est pas enclenché, c'est-à-dire lorsque la transmission est couplée, l'équation 1 peut être reformulée de la façon suivante :

$$M_{Vh}\gamma = F_{mot\_roues} - F_{resist}(SCx, M_{Vh}, V_{Vh}) + M_{Vh}g.\sin(\alpha_{pente}) \quad (Eq. 2)$$

Avec $M_{vh}$ : masse du véhicule
g : accélération de la pesanteur
$\gamma$ : accélération longitudinale
$F_{mot\_roues}$ : force motrice au niveau des roues
$F_{resist}$ : force de résistance résultante des contributions aérodynamique, de la boite de vitesses et des pneumatiques du véhicule.
$SC_x$ : Coefficient de trainée aérodynamique
$V_{vh}$ : vitesse du véhicule
$\alpha_{pente}$ : degré d'inclinaison du sol

Lorsque le mode de roulage en « roue libre » est enclenché, c'est-à-dire lorsque la transmission est découplée, l'équation 1 peut être reformulée de la façon suivante :

$$M_{Vh}\gamma = -F_{resist}(SCx, M_{Vh}, V_{Vh}) + M_{Vh}g.\sin(\alpha_{pente}) \quad (Eq. 3)$$

Le véhicule est alors mu par son poids et par la force résultante des forces résistantes tendant à le ralentir ou à l'accélérer dans les cas de forte pente.
Lors du passage d'un mode de roulage en « roue libre » désenclenché à un mode de roulage en « roue libre » enclenché, on peut déterminer un écart d'accélération longitudinale $\Delta\gamma$ en fonction des équations Eq. 2 et Eq. 3, et s'écrivant de la façon suivante :

$$\Delta\gamma = \frac{F_{motrice\_roues}}{M_{Vh}} = \frac{C_{motrice\_roues}}{M_{Vh}R_{Roues}} = \frac{C_{motrice\_moteur} * K}{M_{Vh}R_{Roues}} \quad (Eq. 4)$$

Avec K = Ratio de transmission en cours (hors Mode de roulage en « roue libre ») ou envisagé (en Mode de roulage en « roue libre »),
$R_{roues}$ = Rayon moyen des roues du véhicule,
$C_{motrice\_roues}$ = Couple du groupe moteur à la roue,
$C_{motrice\_moteur}$ = couple du groupe moteur au primaire de la transmission.

La figure 2 illustre de façon schématique les différentes conditions d'entrée et de sortie du mode de roulage en roue libre.
On entre dans le mode de roulage en roue libre soit depuis un fonctionnement en mode de motricité (référencé 10a), soit depuis un fonctionnement en coupure d'injection (référencé 11a). Lorsque l'écart d'accélération longitudinale $\Delta\gamma$ est compris entre le premier seuil (Seuil 1) et le deuxième seuil (Seuil 2) et que les autres conditions décrites ci-dessous sont satisfaites, le mode de roulage en roue libre est activé (référencé 12).
En d'autres termes, le procédé de commande enclenche l'entrée dans le mode de roulage en « roue libre » lorsque toutes les conditions suivantes sont réalisées :

- la pédale de frein est relâchée, et
- $\Delta\gamma$ < seuil 1, et
- $\Delta\gamma$ > seuil 2, et
- RapportBV_en_cours $\geq$ RapportMini_Sailing, et
- VvehMiniSailing $\leq$ Vveh_actuelle $\leq$ VvehMaxiSailing.

Avec Seuil 1 > 0 et Seuil 2 < 0

RapportBV_en_cours : Rapport de boite de vitesses en cours
RapportMini_Sailing : Rapport de boite de vitesses en mode Mini autorisant le roulage en « roue libre »
VvehMiniSailing : Vitesse minimale en mode de roulage en « roue libre »
Vveh_actuelle : Vitesse courante
VvehMaxiSailing : Vitesse maximale en mode de roulage en « roue libre »

Il apparaît également que le critère d'entrée/sortie tend vers la valeur 0 par valeur supérieure lorsque l'on entre en mode de roulage en « roue libre » depuis un mode de fonctionnement dans lequel une force de traction du groupe moteur est appliquée sur les roues motrices.

Par contre, le critère d'entrée/sortie tend vers la valeur 0 par valeur inférieure lorsque l'on entre en mode de roulage en « roue libre » depuis un mode de coupure d'injection (« Fuel Cut-off Mode » en langue anglaise).

De plus, lorsque le mode de roulage en « roue libre » est enclenché, un mode de régulation du ralenti du moteur à combustion interne et/ou un couple nul des machines électriques est activé. On minimise ainsi la consommation de carburant tout en maintenant le groupe motopropulseur dans une situation permettant la reprise de traction.

La sortie du mode de roulage en roue libre dépend des conditions décrites ci-dessous, et notamment de l'évolution de l'écart d'accélération longitudinale $\Delta\gamma$. Si l'écart d'accélération longitudinale $\Delta\gamma$ dépasse le troisième seuil (Seuil 3), le mode de roulage en roue libre est désactivé, et le véhicule reprend un fonctionnement en mode de traction (référence 10b).

Si l'écart d'accélération longitudinale $\Delta\gamma$ devient inférieur au quatrième seuil (Seuil 4), le mode de roulage en roue libre est désactivé, et le véhicule reprend un fonctionnement en coupure d'injection (référence 11b).

Ainsi, le procédé de commande enclenche la sortie du mode de roulage en « roue libre » lorsque l'une quelconque des conditions suivantes est réalisée:

- la pédale de frein est enfoncée
- $\Delta\gamma$ > seuil 3
- $\Delta\gamma$ < seuil 4
- RapportBV_en_cours < RapportMini_Sailing
- Vveh_actuelle $\geq$ VvehMaxiSailing
- Vveh_actuelle $\leq$ VvehMiniSailing

Avec seuil 3 > 0 et seuil 4 < 0.

On notera que la condition $\Delta\gamma$ > seuil 3 correspond à un appui de la pédale d'accélérateur, c'est-à-dire à une demande de motricité.

La condition $\Delta\gamma$ < seuil 4 correspond, quant à elle, à un relâchement complet de la pédale d'accélérateur, c'est-à-dire à une demande de frein moteur.

Les valeurs du premier seuil, du deuxième seuil, du troisième seuil et du quatrième seuil sont calibrables en fonction de la vitesse du véhicule, sachant que les valeurs acceptables pour ces seuils diffèrent à basse vitesse et à haute vitesse.

Alternativement, le mode de roulage en « roue libre » peut être complété par un arrêt du moteur thermique en cours de mode de roulage en « roue libre », l'activation et la désactivation du mode de roulage en « roue libre » selon le procédé décrit ci-dessus entraine l'arrêt et le redémarrage du moteur thermique.

Le système et le procédé de commande permettent ainsi de désengager et de rengager la transmission de façon transparente pour l'utilisateur. Dans les phases de désengagement de la transmission, le groupe moteur fonctionne au ralenti ou est arrêté ce qui permet de réduire drastiquement la consommation de carburant.

**Revendications**

1. Procédé de commande d'un véhicule automobile comprenant au moins un moteur à combustion interne (2) relié à des roues motrices (3) par une transmission (4), comprenant les étapes suivantes :

   on détermine le couple moteur au niveau des roues,
   on détermine l'accélération longitudinale du véhicule lorsque le mode de roulage en « roue libre » est engagé, en fonction du couple moteur et des couples résistants à la roue,
   on détermine l'accélération longitudinale du véhicule lorsque le mode de roulage en « roue libre » est désengagé, en fonction des couples résistants à la roue,
   on détermine l'écart d'accélération longitudinale entre un mode de roulage en « roue libre » engagé et un mode de roulage en « roue libre » désengagé,
   on ouvre la chaîne de transmission lorsque l'écart d'accélération longitudinale tend sensiblement vers une valeur nulle.

2. Procédé de commande selon la revendication 1, dans lequel on ouvre la chaîne de transmission lorsque toutes les conditions suivantes sont réalisées :

- la pédale de frein est relâchée, et
- l'écart d'accélération longitudinale lors du passage d'un mode de roulage en « roue libre » désenclenché à un mode de roulage en « roue libre » enclenché, est inférieur à un premier seuil positif, et supérieur à un deuxième seuil négatif, et
- le rapport de boite de vitesse engagé est supérieur à un rapport de seuil, et
- la vitesse du véhicule est comprise entre une valeur minimale et une valeur maximale de mode de roulage en roue libre, et

**3.** Procédé de commande selon la revendication 1, dans lequel on ferme la chaîne de transmission lorsque l'une quelconque des conditions suivantes est réalisée:

- la pédale de frein est enfoncée, ou
- l'écart d'accélération longitudinale lors du passage d'un mode de roulage en « roue libre » enclenché à un mode de roulage en « roue libre » désenclenché, est supérieur à un troisième seuil, ou
- l'écart d'accélération longitudinale lors du passage d'un mode de roulage en « roue libre » enclenché à un mode de roulage en « roue libre » désenclenché, est inférieur à un quatrième seuil, ou
- le rapport de boite de vitesse engagé est inférieur à un rapport de seuil, ou
- la vitesse du véhicule est inférieure ou égale à une valeur minimale de mode de roulage en roue libre, ou
- la vitesse du véhicule est supérieure ou égale à une valeur maximale de mode de roulage en roue libre.

**4.** Procédé de commande selon l'une quelconque des revendications 2 ou 3, dans lequel le premier seuil, le deuxième seuil, le troisième seuil et le quatrième seuil sont calibrables en fonction de la vitesse du véhicule.

**5.** Procédé de commande selon l'une quelconque des revendications précédentes, dans lequel on commande un arrêt du moteur à combustion interne lorsque l'on commande l'ouverture de la chaine de transmission.

**6.** Système de commande d'un véhicule automobile comprenant au moins un moteur à combustion interne (2) relié à des roues motrices (3) par une transmission (4),
un moyen de détermination du couple moteur au niveau des roues,
un moyen de détermination de l'accélération longitudinale du véhicule lorsque le mode de roulage en « roue libre » est engagé en fonction du couple moteur et des couples résistants à la roue,
un moyen de détermination de l'accélération longitudinale du véhicule lorsque le mode de roulage en « roue libre » est désengagé en fonction du couple moteur et des couples résistants à la roue,
un moyen de détermination de l'écart d'accélération longitudinale entre un mode de roulage en « roue libre » engagé et un mode de roulage en « roue libre » désengagé,
un moyen de commande apte à commander l'ouverture de la chaîne de transmission lorsque l'écart d'accélération longitudinale tend sensiblement vers une valeur nulle.

**7.** Système de commande selon la revendication 6, dans lequel le moyen de commande est également apte à commander un arrêt du moteur à combustion interne lorsque l'on commande l'ouverture de la chaine de transmission.


**Patentansprüche**

**1.** Verfahren zum Steuern eines Kraftfahrzeugs, welches mindestens einen Verbrennungsmotor (2) aufweist, welcher über ein Getriebe (4) mit Antriebsrädern (3) verbunden ist, wobei das Verfahren die folgenden Schritte aufweist:

es wird das Antriebsmoment im Bereich der Räder bestimmt,
es wird die Längsbeschleunigung des Fahrzeugs in Abhängigkeit des Antriebsmoments und der Widerstandsmomente am Rad bestimmt, wenn die Betriebsart Rollen mit "freiem Rad" eingeschaltet ist,
es wird die Längsbeschleunigung des Fahrzeugs in Abhängigkeit der Widerstandsmomente am Rad bestimmt, wenn die Betriebsart Rollen mit "freiem Rad" ausgeschaltet ist,
es wird der Unterschied der Längsbeschleunigung zwischen einer eingeschalteten Betriebsart Rollen mit "freiem Rad" und einer ausgeschalteten Betriebsart Rollen mit "freiem Rad"bestimmt,
es wird die Antriebskette geöffnet, wenn der Unterschied der Längsbeschleunigung im Wesentlichen zu einem Wert Null tendiert.

**2.** Steuerverfahren nach Anspruch 1, bei welchem die Antriebskette geöffnet wird, wenn die folgenden Bedingungen erfüllt sind:

- das Bremspedal ist gelöst, und
- der Unterschied der Längsbeschleunigung beim Übergang von einer ausgeschalteten Betriebsart Rollen mit "freiem Rad" zu einer eingeschalteten Betriebsart Rollen mit "freiem Rad" ist kleiner als ein erster positiver Schwellenwert und größer als ein zweiter negativer Schwellenwert, und
- die eingelegte Übersetzung des Getriebes ist größer als eine Schwellenübersetzung, und
- die Geschwindigkeit des Fahrzeugs liegt zwischen einem Minimalwert und einem Maximalwert der Betriebsart Rollen mit freiem Rad, und

3. Steuerverfahren nach Anspruch 1, bei welchem die Antriebskette geschlossen wird, wenn die folgenden Bedingungen erfüllt sind:

- das Bremspedal ist gedrückt, oder
- der Unterschied der Längsbeschleunigung beim Übergang von einer eingeschalteten Betriebsart Rollen mit "freiem Rad" zu einer ausgeschalteten Betriebsart Rollen mit "freiem Rad" ist größer als ein dritter Schwellenwert, oder
- der Unterschied der Längsbeschleunigung beim Übergang von einer eingeschalteten Betriebsart Rollen mit "freiem Rad" zu einer ausgeschalteten Betriebsart Rollen mit "freiem Rad" ist kleiner als ein vierter Schwellenwert, oder
- die eingelegte Übersetzung des Getriebes ist kleiner als eine Schwellenübersetzung, oder
- die Geschwindigkeit des Fahrzeugs ist kleiner als ein Minimalwert der Betriebsart Rollen mit freiem Rad, oder
- die Geschwindigkeit des Fahrzeugs ist größer oder gleich einem Maximalwert der Betriebsart Rollen mit freiem Rad.

4. Steuerverfahren nach einem der Ansprüche 2 oder 3, bei welchem der erste Schwellenwert, der zweite Schwellenwert, der dritte Schwellenwert und der vierte Schwellenwert in Abhängigkeit von der Geschwindigkeit kalibrierbar sind.

5. Steuerverfahren nach einem der vorhergehenden Ansprüche, bei welchem ein Stoppen des Verbrennungsmotors betätigt wird, wenn das Öffnen der Antriebskette betätigt wird.

6. System zum Steuern eines Kraftfahrzeugs, aufweisend mindestens einen Verbrennungsmotor (2), welcher über ein Getriebe (4) mit Antriebsrädern (3) verbunden ist,
ein Mittel zum Bestimmen des Antriebsmoments im Bereich der Räder,
ein Mittel zum Bestimmen der Längsbeschleunigung des Fahrzeugs in Abhängigkeit des Antriebsmoments und der Widerstandsmomente am Rad, wenn die Betriebsart Rollen mit "freiem Rad" eingeschaltet ist,
ein Mittel zum Bestimmen der Längsbeschleunigung des Fahrzeugs in Abhängigkeit des Antriebsmoments und der Widerstandsmomente am Rad, wenn die Betriebsart Rollen mit "freiem Rad" ausgeschaltet ist,
ein Mittel zum Bestimmen des Unterschieds der Längsbeschleunigung zwischen einer eingeschalteten Betriebsart Rollen mit "freiem Rad" und einer ausgeschalteten Betriebsart Rollen mit "freiem Rad",
ein Steuermittel, welches geeignet ist, das Öffnen der Antriebskette zu betätigen, wenn der Unterschied der Längsbeschleunigung im Wesentlichen zu einem Wert Null tendiert.

7. Steuersystem nach Anspruch 6, bei welchem das Steuermittel ebenfalls geeignet ist, ein Stoppen des Verbrennungsmotors zu betätigen, wenn das Öffnen der Antriebskette betätigt wird.

**Claims**

1. Method for controlling a motor vehicle comprising at least an internal combustion engine (2) connected to the driving wheels (3) by a transmission (4), said method comprising the following steps:

determining the engine torque at the wheels,
determining the longitudinal acceleration of the vehicle when the "free-wheeling" driving mode is engaged, on the basis of the engine torque and the resisting torques at the wheel,
determining the longitudinal acceleration of the vehicle when the "free-wheeling" driving mode is disengaged, on the basis of the resisting torques at the wheel,

determining the difference in longitudinal acceleration between an engaged "free-wheeling" driving mode and a disengaged "free-wheeling" driving mode,

opening the transmission chain when the longitudinal acceleration difference leans substantially toward a value of zero.

2. Control method according to Claim 1, in which the transmission chain is opened when all the following conditions are met:

- the brake pedal is released and
- the longitudinal acceleration difference when switching from a disengaged "free-wheeling" driving mode into an engaged "free-wheeling" driving mode is less than a first positive threshold and greater than a second negative threshold, and
- the gear ratio engaged is greater than a ratio threshold, and
- the speed of the vehicle is between a minimum free-wheeling driving mode value and a maximum free-wheeling driving mode value, and

3. Control method according to Claim 1, in which the transmission chain is closed when any one of the following conditions is met:

- the brake pedal is engaged, or
- the longitudinal acceleration difference when switching from an engaged "free-wheeling" driving mode into a disengaged "free-wheeling" driving mode is greater than a third threshold, or
- the longitudinal acceleration difference when switching from an engaged "free-wheeling" driving mode into a disengaged "free-wheeling" driving mode is lower than a fourth threshold, or
- the gear ratio engaged is lower than a threshold ratio, or
- the speed of the vehicle is lower than or equal to a minimum free-wheeling driving mode value, or
- the speed of the vehicle is greater than or equal to a maximum free-wheeling driving mode value.

4. Control method according to either of Claims 2 and 3, in which the first threshold, the second threshold, the third threshold, and the fourth threshold can be calibrated on the basis of the speed of the vehicle.

5. Control method according to any one of the preceding claims, wherein a stopping of the internal combustion engine is ordered when ordering the opening of the transmission chain.

6. System for controlling a motor vehicle comprising at least an internal combustion engine (2) connected to driving wheels (3) by a transmission (4),

a means for determining the engine torque at the wheels,

a means for determining the longitudinal acceleration of the vehicle when the "free-wheeling" driving mode is engaged, on the basis of the engine torque and the resisting torques at the wheel,

a means for determining the longitudinal acceleration of the vehicle when the "free-wheeling" driving mode is disengaged, on the basis of the engine torque and the resisting torques at the wheel,

a means for determining the difference in longitudinal acceleration between an engaged "free-wheeling" driving mode and a disengaged "free-wheeling" driving mode, and

a control means able to order the opening of the transmission chain when the longitudinal acceleration difference leans substantially toward a value of zero.

7. Control system according to Claim 6, in which the control means is also able to order a stopping of the internal combustion engine when ordering the opening of the transmission chain.

# FIG.1

```
      ┌────────┐      ┌────────┐      ┌────────┐
      │   2    │ ───► │   4    │ ───► │   3    │
      └────────┘      └────────┘      └────────┘
          ▲               ▲▼
┌─────────┼───────────────┼──────────────┐
│ ┌─────┐ │  ┌─────────┐  │ ┌──────────┐ │
│ │  8  │─┼─►│ ┌─────┐ │──┼►│          │ │
│ └─────┘ │  │ │ 6a  │ │  │ │    7     │ │ ～ 5
│ ┌─────┐ │  │ └─────┘ │  │ │          │ │
│ │  9  │─┼─►│    6    │◄─┼─│          │ │
│ └─────┘ │  └─────────┘  │ └──────────┘ │
└─────────┴───────────────┴──────────────┘
```

# FIG.2

```
                        ▲ Δγ
                        │
 ┌──────┐               │               ┌──────┐
 │ 10b  │   Seuil 3     │               │ 10a  │
 └──────┘ ──────────────┼───────────    └──────┘
            ╱           │          ╲
          ↗  Seuil 1    │           ╲
        ───────────────┼────────────╲───
                        │             ╲
     0  ────────────┌──┼──┐─────────────
                    │ 1│2 │
                    └──┼──┘
        ───────────────┼────────────╱───
            Seuil 2    │           ╱
          ↙            │          ╱
 ┌──────┐ ─────────────┼─────────    ┌──────┐
 │ 11b  │   Seuil 4    │               │ 11a  │
 └──────┘               │               └──────┘
                        │
```

**EP 2 991 872 B1**

**RÉFÉRENCES CITÉES DANS LA DESCRIPTION**

**Documents brevets cités dans la description**

- WO 2012169960 A
- WO 2010128898 A
- FR 2829186
- JP 59089235 B